# EUROPEAN PATENT APPLICATION

(11) **EP 3 819 114 A1**
(43) Date of publication of application: **12.05.2021**
(21) Application number: 19207517.4
(22) Date of filing: 06.11.2019
(51) Int. Cl.: B32B 3/12, B32B 5/02, B32B 5/14, B32B 5/16, B32B 5/20

(54) **MICA BASED SANDWICH STRUCTURES**

(71) Applicant: COGEBI société anonyme, 1651 Lot (BE)
(72) Inventor: GEERTS, Chris, 4861 BS Chaam (NL); DEL REY, Francisco, 1348 Ottignies Louvain-la-Neuve (BE); BOEL, Sandra, 9402 Meerbeke (BE)
(74) Representative: Pronovem

(57) **Abstract**

The present invention is related to a composite sandwich panel (1) a comprising a first layer (2) comprising mica paper, a folded core or honeycomb structure (3) comprising mica paper and a second layer (5) comprising mica paper; **characterised in that** the first (2) and second (5) layers comprising mica paper are glued onto the foldcore by means of mineral adhesive comprising one or more alkali metal silicate(s).

## Description

### Field of the invention

The present invention is related to a mica based sandwich structures comprising two external sheets separated by a folded core mica structure. The core mica structure being a honeycomb or other folded structure.

### State of the art

Mica paper, or reconstituted mica as it is sometimes called, is well known and can be prepared in any of a **number** of ways. According to US 2,549,880, mica is dehydrated at an elevated temperature, placed in a liquid medium, and broken up to form a pulp which is then laid down by paper making techniques. According to US 2,405,576, mica suitable for preparing paper can be obtained by breaking mica into fine platelets under the action of liquid jets. In still another process described in US 3,110,299, mica is delaminated for paper making purposes by peeling therefrom successive layers of materials.

Mica paper is quite weak and in practical use it is impregnated with a suitable resin or other binder and laid up into laminates of desired thickness which are then cured or hardened in a manner suitable to the binder used. Such mica paper laminates have found many uses in applications where heat and direct flame resistance, good electrical insulation, good shock- and high pressure resistance, among others, are required.

US 4,601,952; US 4,603,088 and WO 86/00571 disclose a mica composite laminate comprising a plurality of papers consisting essentially of mica, each impregnated with about 5% to about 14% by weight of a polysiloxane binder; said binder containing about 1% to about 4% by weight of a titanate and about 0.5% to about 2% by weight of a naphthenate.
In US 4,601,931 and EP 0175635: 5 to 20% by weight of a polysiloxane binder is claimed; in US 4,683,162; US 4,783,365 and US 4,803,113: 5 to 25% by weight of a polysiloxane binder is claimed.

It is known from document BE1002073 to use mica paper for fabricating Honeycomb sandwich structure having high fire resistance. In this document the honeycomb structure itself is made by assembling sheets of "micanite" by standard methods used in the cardboard industry to produce honeycomb structure. In this document, very few details are given about the precise process to produce said "micanite". It is just said that said "micanite" is sufficiently soft to be formed in a honeycomb structure.

Foldcore sandwich panels consist of a partially folded core, such as those based on the Miura pattern, sandwiched between two unfolded sheets. They have been investigated in the aerospace and composite engineering industries as a potential substitute to honeycomb panels, as they possess a number of favourable properties that are not possible with other types of high-performance sandwich panels. Such structure, and the method to produce such structure in paper is for example described in document GB 1390 132.

In any cases the different part of the structure are usually glued together by silicone based adhesive, as for example described in PCT/EP2019/057232, having fair but limited thermal resistance. In some fire security products this limited thermal resistance may represent a security issue.

So, it is desirable to be able to produce a honeycomb-like structure having an improved fire resistance close to that mineral mica paper.

### Summary of the invention

A first aspect of the present invention discloses fire resistant panel comprising:
- a first layer comprising (or preferably consisting of) mica paper;
- a folded core or honeycomb structure comprising (or preferably consisting of) mica paper;
- a second layer comprising (or preferably consisting of) mica paper;
**characterised in that** the first and second layers comprising mica paper are glued onto the foldcore by means of mineral adhesive comprising one or more alkali metal silicate(s).

Preferred embodiments of the first aspect of the invention disclose at least one, or an appropriate combination of the following features:
- the alkali metal silicate adhesive has a foam structure, partially filling the empty space left by the foldcore or honeycomb structure between the first and second layer, preferably, the foam fully fills the empty space left by the foldcore or honeycomb structure between the first and second layer;
- the one or more alkali metal silicate(s) is (are) selected from the group consisting of lithium silicate, sodium silicate and potassium silicate;
- the adhesive further comprises additional metal silicates such as aluminum silicate for improving the adhesive moisture resistance;
- the panel comprises additional layer(s) comprising fiber mat(s) between the foldcore or honeycomb structure and the first and/or second layer(s) comprising mica paper;
- the molar ratio of silica to alkali metal oxide is comprised between 1.6 and 3.5, preferably between 2.0 and 3.3, preferably between 2.5 and 3.2
- the foam density is comprised between 0.01 and 0.25 g/cm3, preferably between 0.02 and 0.1 g/cm3, more preferably between 0.05 and 0.06 g/cm3 most preferably between 0.02 and 0.04 g/cm3;
- the structure further comprises additional layers, preferably for decorative aspect.

A second aspect of the invention is related to a method for producing the fire resistant panel of the first aspect of the invention, said method comprising the steps of:
- coating of a liquid mineral solution comprising said alkali metal silicate(s) onto a first layer comprising mica paper, or disposing a fibre mat impregnated with said alkali metal silicate(s) onto said first layer, thereby forming a first hydrated alkali metal silicate(s) surface;
- disposing a first face of a foldcore or honeycomb structure comprising mica paper onto said first hydrated alkali metal silicate(s) surface;
- coating of a liquid mineral solution comprising said alkali metal silicate(s) onto a second layer comprising mica paper, or disposing a fibre mat impregnated with said alkali metal silicate(s) onto said second layer, thereby forming a second hydrated alkali metal silicate(s) surface;
- disposing said second hydrated alkali metal silicate(s) surface onto a second face of the foldcore or honeycomb structure;
- heating the obtained foldcore or honeycomb sandwich structure at a temperature comprised between 250 and 350°C, preferably between 270 and 330°C for a time period comprised between 1 and 20 minutes, preferably between 5 and 15 minutes.

The coating may advantageously be performed by spraying or curtain coating.

Preferably, the first and second hydrated alkali metal silicate(s) surface are pre-dried before final heating step at a temperature between 60 and 100°C to obtain an adequate moisture level in the alkali metal silicate(s) before heating to regulate swelling (foaming) of the alkali metal silicate(s) in the heating step.

Advantageously, the mica paper in the foldcore or honeycomb structure is a silicone impregnated partially cured mica paper, which is cured during the heating step. Details of this partial cure followed by final curing of the foldcore or honeycomb structure can be found in PCT/EP2019/057232.

Preferably, the liquid mineral solution is an aqueous solution comprising between 25 and 55 % by weight, preferably between 30 and 50 % by weight, more preferably between 35 and 50% by weight of alkali metal silicate (s).

Preferably, the obtained structure is pressed at a constrained thickness during the heating step (i.e. it is the geometrical distance which is regulated instead of the pressure).

### Short description of the drawings

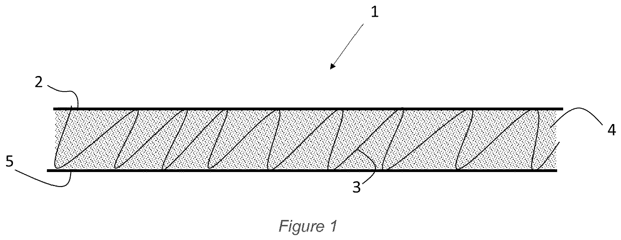

Fig. 1 represents a side view of an example of fire resistant panel according to the invention.

### Detailed description of the invention

The present invention aims at improving the fire resistance of mica based sandwich panels 1 comprising two mica paper skins 2,5 wrapping a folded or honeycomb mica paper structure 3 by reducing the use of organic matters in such panels. This is obtained by using alkali metal based silicates such as lithium silicate, sodium silicate and potassium silicate instead of the usual silicone based adhesives.

As the silicates described here above are moisture sensitive, additional metal silicates improving moisture sensitivity are preferably added to the adhesive formulation.

Those silicate based adhesives not only have the advantage of sustaining higher temperature than silicone based adhesives. As an additional advantage, depending on their residual moisture, they swell in the form of a foam when heated at temperatures comprised between 250 and 350°C.

Such foamed structures have the advantage of increasing the contact surface between the skin layers and the core, thereby improving the macroscopic mechanical strength of the structure. As a further advantage, the foam 4 structure improves the isolating power of the panel, further reducing fire propagation.

Therefore, the preferred panel structure of the invention is the one represented in figure 1, wherein the core structure is completely embedded in the foam 4 formed by the alkali metal silicate.

Such a structure can be obtained by pressing two mica paper skin layers 2,5 coated with hydrated alkali metal silicates onto a mica paper core 3 and heating the obtained structure at foaming temperature of the hydrated alkali metal silicates. Adequate temperatures are comprised between 250 and 350°C, preferably between 270 and 330°C for time duration comprised between 1 and 20 minutes, preferably between 5 and 15 minutes.

In order to ease the water outflow during swelling of the foam, a foldcore structure is preferred over honeycomb. In case of honeycomb, openings are preferably made in the honeycomb walls to let water vapour flowing out of the foam.

The coating of the mica paper can be performed by usual liquid coating method, such as spraying, curtain coating or by using a mat impregnated by a liquid mineral solution comprising the alkali metal silicate.

In a preferred embodiment, a layer of alkali metal silicate is deposited, on a mica plate that has an integrated non-woven glass fiber surface. The silicate layer deposited on the plate is solid at room temperature and its thickness is enough for, by heating, achieve the gluing of the sandwich core and swelling and expansion in the free space of the core, in a way that it improves the thermal insulation.

The final product comprises at least one layer of mica paper comprising a glass fiberfinish (mica silicone pressed together with non-woven glass mat) In case of both plates surfaces having the glass fibre finish, one of the faces is used for a better adhesion of paint or finish of the external skin, or is also covered with a silicate layer, which is used to form a multi core sandwich (two or more cores piled together)

Those plates can be cut at the dimensions necessary for the final panel structure, then a core intercalated in between, cogetherm edge reinforcements can also be introduced on the perimeter of the structure, and the whole piece heated under limited spacing at for example 280 C for obtaining the final adhesion of the pieces and swelling of the foam.

### Example

A non-woven fiberglass paper of around 25 g/m² is impregnated with around 2kg per square meter of aqueous sodium silicate solution 43% in dry matters.

This wet non-woven is disposed on top of a Cogemicanite® 505.3P mica layer and a folded mica core is disposed on this wet non-woven.

Another mica layer with an identically sodium silicate impregnated non-woven is used to close the sandwich.

Then the sandwich is placed with a restriction of height at the value of the thickness of the core + 2 x thickness of the skins inside an oven. There it is dried for 1-1.5 h at 100°C and then treated at 280°C for also 1-1.5 hour for expansion.

## Claims

1. Composite sandwich panel (1) comprising a first layer (2) comprising mica paper, a folded core or honeycomb structure (3) comprising mica paper and a second layer (5) comprising mica paper;
**characterised in that** the first (2) and second (5) layers comprising mica paper are glued onto the foldcore by means of mineral adhesive comprising one or more alkali metal silicate(s).

2. Composite sandwich panel (1) according to claim 1 wherein the alkali metal silicate adhesive has a foam (4) structure, partially filling the empty space left by the foldcore or honeycomb (3) structure between the first and second layer, preferably, the foam (4) fully fills the empty space left by the foldcore or honeycomb (3) structure between the first (2) and second (5) layer;

3. Composite sandwich panel (1) according to claim 1 or 2 wherein the one or more alkali metal silicate(s) is (are) selected from the group consisting of lithium silicate, sodium silicate and potassium silicate.

4. Composite sandwich panel (1) according to any of the previous claims wherein the panel (1) comprises additional layer(s) comprising fiber mat(s) between the foldcore or honeycomb (3) structure and the first and/or second layer(s) (2,5) comprising mica paper.

5. Composite sandwich panel (1) according to any of the previous claims wherein the molar ratio of silica to alkali metal oxide is comprised between 1.6 and 3.5, preferably between 2.0 and 3.3, preferably between 2.5 and 3.2.

6. Composite sandwich panel (1) according to any of the previous claims wherein the foam density is comprised between 0.01 and 0.25 g/cm3, preferably between 0.01 and 0.05 g/cm3, more preferably between 0.02 and 0.04 g/cm3 most preferably between 0.02 and 0.03 g/cm3.

7. Method for producing the composite panel (1) of any of the previous claims, said method comprising the steps of:
**i.** coating of a liquid mineral solution comprising said alkali metal silicate(s) onto a first layer (2) comprising mica paper, or disposing a fibre mat impregnated with said alkali metal silicate(s) onto said first layer (2), thereby forming a first hydrated alkali metal silicate(s) surface;
**ii.** disposing a first face of a foldcore or honeycomb structure (3) comprising mica paper onto said first hydrated alkali metal silicate(s) surface;
**iii.** coating of a liquid mineral solution comprising said alkali metal silicate(s) onto a second layer (5) comprising mica paper, or disposing a fibre mat impregnated with said alkali metal silicate(s) onto said second layer (5), thereby forming a second hydrated alkali metal silicate(s) surface;
**iv.** disposing said second hydrated alkali metal silicate(s) surface onto a second face of the foldcore or honeycomb structure;
**v.** heating the obtained foldcore or honeycomb sandwich structure at a temperature comprised between 250 and 350°C, for a duration comprised between 1 and 20 minutes.

8. Method according to claim 7 wherein the first and second hydrated alkali metal silicate(s) surface are pre-dried before final heating step at a temperature between 60 and 100°C.

9. Method according to claim 7 or 8 wherein the mica paper in the foldcore or honeycomb structure is a silicone impregnated partially cured mica paper, which is fully cured during the heating step.

10. Method according to any of the claims 7 to 9 wherein the liquid mineral solution is an aqueous solution comprising between 25 and 55 % by weight, preferably between 30 and 50 % by weight, more preferably between 35 and 50% by weight of alkali metal silicate (s).

11. Method according to any of the claims 7 to 10 wherein the obtained structure is pressed at a constrained thickness during the heating step during the final heating step.
